# EUROPÄISCHE PATENTSCHRIFT

(11) **EP 1 163 039 B1**
(45) Veröffentlichungstag und Bekanntmachung des Hinweises auf die Patenterteilung: **04.06.2003**
(21) Anmeldenummer: 00920535.2
(22) Anmeldetag: 22.03.2000
(51) Int. Cl.: B01D 46/24, F02M 35/024

(54) **FILTER MIT TOPFFÖRMIGEM GEHÄUSE UND RUNDFILTERPATRONE**
FILTER WITH A CONICAL HOUSING AND ROUND FILTER CARTRIDGE
FILTRE A BOITIER CONIQUE ET CARTOUCHE FILTRANTE RONDE

(30) Priorität: 24.03.1999 DE 19913181
(43) Veröffentlichungstag der Anmeldung: 19.12.2001
(73) Patentinhaber: FILTERWERK MANN + HUMMEL GmbH, 71631 Ludwigsburg (DE)
(72) Erfinder: REINHOLD, Thomas, 50011 Zaragoza (ES)
(74) Vertreter: Voth, Gerhard, Dipl.-Ing.
(86) Internationale Anmeldenummer: EP0002530
(87) Internationale Veröffentlichungsnummer: WO00056423

(56) Entgegenhaltungen:
- WO-A-96/38217
- WO-A-97/16235
- WO-A-97/22795
- DE-A- 2 739 290
- US-A- 4 588 426
- US-A- 4 950 317

## Beschreibung

Die Erfindung betrifft ein Filter, insbesondere einen Luftfilter für die Ansaugluft von Brennkraftmaschinen, der aus einem topfförmigen Gehäuse und einer auf einem Stützrohr befestigten Rundfilterpatrone gebildet ist, nach der Gattung des Patentanspruches 1.

Die Verwendung von Rundfiltepatronen in Topfgehäusen ist zum Beispiel aus der EP 673 280 B1 bekannt Gemäß diesen Dokumenten wird eine Rundfilterpatrone in ein Topfgehäuse eingebaut, welches zu diesem Zweck in zwei Gehäusehälften getrennt werden kann, weiterhin kann zum Schutz der Rundfilterpatrone gegen ein Einfallen des Filtermediums bei zu hohem Druckunterschied zwischen Roh- und Reinseite ein Stützrohr im Inneren der Rundfilterpatrone angebracht werden.

Das Einsetzen des Stützrohres in eine der Gehäuseschalen bedeutet jedoch einen zusätzlichen Montageaufwand. Außerdem muß für das Stützrohr eine Passung zur Fixierung in der Gehäuseschale vorgesehen werden. Hieraus resultieren gewisse Anforderungen an die Formgenauigkeit der Gehäusebauteile. Selbiges gilt auch für die Teilung des Gehäuses in zwei Gehäuseschalen. Aus wirtschaftlichen Gründen werden derartige Topfgehäuse jedoch häufig aus Kunststoff hergestellt. Je höher die Anforderungen an die Maßgenauigkeit sind, desto geringer ist der wirtschaftliche Vorteil, der sich aus der Wahl des Materials ergibt. Dies gilt genauso für die Trennfuge zwischen den Gehäuseschalen, die gemäß dem oben genannten Dokument durch mehrere Schnappschüsse überbrückt werden muß, um eine genügende Dichtung zwischen den Gehäuseteilen zu erzielen.

Auch die DE 2 739 290 A1 zeigt einen Luftfilter mit einem topfförmigen Gehäuse, welches aus zwei Gehäuseschalen besteht. Eine der beiden Gehäuseschalen ist dabei einteilig mit einem zylindrischen Stützrohr zur Aufnahme einer Rundfilterpatrone, welche das Gehäuse in eine Rohseite und eine Reinseite trennt, hergestellt. Das Stützrohr weist dabei eine gitterartige Struktur auf.

Hier ergibt sich jedoch der Nachteil einer komplizierten und teuren Fertigung des Gehäuseteils, welcher einteilig mit dem Stützrohr verbunden ist. Sollte dieses Teil im Spritzgußverfahren hergestellt werden, bedarf es, aufgrund der durch das Stützrohr vorhandenen Hinterschneidungen, eines äußerst aufwendigen Spritzgieß werkzeuges.

Weiterhin zeigt die WO-A-97/16235 ein Filter mit einem topfförmigen Gehäuse aus zwei Gehäuseschalen, wobei ein zentrales, konisches Stützrohr einteilig mit dem Behälter hergestellt ist. Das zentrale Stützrohr, das keine gitterartige Struktur aufweist, stützt eine Rundfilterpatrone mit einem Filtermedium reinseitig ab.
Hier ist die Ausführung des Stützrohres ohne die Gitterstruktur vorgeschlagen worden um den Hinterschneidungen zu entgehen. Nachteilig erweist sich jedoch jetzt der erhöhte Materialaufwand sowie das dadurch gesteigerte Gewicht des Gesamtfilters.

Die Aufgabe der Erfindung besteht daher darin, einen Filter zu schaffen, der wirtschaftlich in der Herstellung ist, große Toleranzen bei der Fertigung der Einzelteile erlaubt und dabei eine hohe Funktionszuverlässigkeit gewährleistet.
Diese Aufgabe wird durch die Merkmale des Patentanspruches 1 gelöst.

### Vorteile der Erfindung

Der erfindungsgemäße Filter besteht in bekannter Weise aus einem topfförmigen Gehäuse, in das eine Rundfilterpatrone derart dichtend eingebaut ist, daß das zu reinigende Fluid den Filtereinsatz von einem Einlaß zu einem Auslaß hin durchströmt. Eine der Gehäuseschalen ist einteilig mit dem Stützrohr hergestellt, welches zur Aufnahme der Filterpatrone vorgesehen ist. Dieses Bauteil kann in einem Prozeßschritt, zum Beispiel als Kunststoffteil durch Spritzgießen, hergestellt werden. Dabei können gesonderte Formwerkzeuge für das Stützrohr eingespart werden. Außerdem entfällt die Notwendigkeit der Montage des Stützrohres in einer der Gehäuseschalen. Dabei werde zusätzliche Dichtungen zwischen Stützrohr und Gehäuseschale entbehrlich. Außerdem wird ein Montageschritt gespart. Weiterhin sind das Stützrohr und die Rundfilterpatrone konisch ausgeführt. Das Stützrohr ist dabei derart ausgeführt, daß in axialer Richtung des Topfgehäuses gesehen, keine Hinterschneidungen auftreten. Da das Stützrohr eine gitterartige Struktur aufweist, ist dies nur bei einer konischen Form möglich. Eine zylindrische Form würde zwangsläufig in axialer Richtung Hinterscheidungen hervorrufen, da die einzelnen radialen Streben in axialer Richtung übereinander liegen würde. Durch den konischen Verlauf ergibt sich jedoch zwischen jeweils zwei benachbarten Radialstreben ein Abstand a, wodurch bei entsprechender Gestaltung des restlichen Topfgehäuses das Gußwerkzeug für die Gehäuseschale mit Stützrohr lediglich zwei Formhälften benötigt. Diese werden dann in axialer Richtung der Gehäuseschale geöffnet und geschlossen. Die erfindungsgemäße Gestaltung der Gehäuseschale hat also eine starke Vereinfachung der Gußform zur Folge. Insbesondere bei Kunststoffspritzgießformen wirkt sich dies wegen der hohen Anschaffungskosten des Formwerkzeuges auch bei großen Stückzahlen deutlich auf die Wirtschaftlichkeit des Filters aus.

Die konische Ausführung des Stützrohres hat aber auch bei der Montage der Filterpatrone eindeutige Vorteile. Diese läßt sich ohne Probleme in der Gehäuseschale mit Stützrohr einsetzen, da eine Berührung zwischen Stützrohr und Patrone erst bei vollständig aufgeschobener Patrone zustande kommt. Dadurch kann auch eine eventuelle Verletzung der Dichtbereiche an den Endscheiben der Patrone durch die Streben des Gitters vermieden werden. In der Einbauposition zentriert sich die Rundfilterpatrone dann von selbst.

Es ist vorteilhaft, für die Rundfilterpatrone ein sternförmig gefaltetes Filterpapier als Filtermedium zu verwenden. Dieses kann kostengünstig aus einer rechteckigen Filterbahn gefaltet werden. Wird dieses dann bei der Herstellung der kegeligen Patrone in eine konische Form gebracht, so werden sich die Stirnseiten des sternförmigen Faltenbalges aus der Ebene heraus konisch verziehen. Dies kann jedoch ohne weiteres durch die Endscheiben ausgeglichen werden. Diese können zum Beispiel aus einem elastischen Material, insbesondere PUR-Schaum hergestellt werden. Die Wahl einer rechteckigen Filterbahn als Halbzeug für die Rundfilterpatrone hat den Vorteil, daß zur Faltung herkömmliche Maschinen verwandt werden können. Außerdem ergibt sich beim Zuschnitt des Filterpapiers keine Verschnitt, sofern dessen Abmessungen richtig gewählt sind.

Eine Alternative zur Verringerung der Herstellkosten des Filters ist die Beachtung eventueller Toleranzen der Bauteile in der Gestaltung der Dichtung. Dies wird dadurch erreicht, daß in der Trennfuge zwischen den Gehäuseschalen eine Labyrinthdichtung vorgesehen ist. Diese kann zum Beispiel aus einer Nut in der einen Gehäuseschale und einem mit dieser korrespondierenden Ringabsatz in der anderen Gehäuseschale gebildet werden. Innerhalb eines Axialbereiches b, der von der Nuttiefe abhängt, können dann Axialtoleranzen der Gehäuseteile, die zu einem Klaffen der Dichtfuge führen, ausgeglichen werden. Auch radiale Toleranzen, zum Beispiel die Unrundheit der Gehäuseschalen, kann durch die Zwangsführung der Labyrinthdichtung in radialer Richtung ausgeglichen werden. Die erfindungsgemäße Gestaltung der Dichtung erlaubt somit einen größeren Toleranzbereich bei der Herstellung der Gehäuseschalen: Dadurch können die Gußwerkzeuge kostengünstiger hergestellt werden sowie der Materialbedarf für das Gehäuse reduziert werden. Dieses Dichtsystem zwischen den Gehäuseschalen schafft die Möglichkeit, die Montagemittel für die Verbindung der beiden Gehäuseschalen wesentlich zu vereinfachen. Da ein axialer Dichtdruck in der Trennfuge zwischen den Gehäuseschalen nicht notwendig ist, sondern der Dichtdruck radial zwischen Nut und Ringabsatz hergestellt wird, genügt eine zentrale Verschraubung in der Deckelfläche, die in eine Aufnahme im Stützrohr eingreift. Anstelle einer Verschraubung sind selbstverständlich auch andere Befestigungsmechanismen denkbar, zum Beispiel ein Bajonettverschluß.

Um auch einen größeren Toleranzbereich zwischen Gehäuse und Filterpatrone zu erzielen, ist es sinnvoll, mindestens eine der Endscheiben der Rundfilterpatrone mit einem elastischen Axialspielausgleich zu versehen. Dieser stützt sich unabhängig von einem eventuell auftretenden Axialspiel im Bereich seiner Elastizität an den Gehausewänden ab. Dabei kann er gleichzeitig für eine axiale Abdichung zwischen Roh- und Reinseite des Gehäuses sorgen. Diese kann aber alternativ oder zusätzlich auch durch eine radiale Abdichtung zum Stützrohr hin gewährleistet werden. Die Endscheiben können starr ausgeführt sein, so daß der Axialspielausgleich ein weiteres Bauteil ist, welches auf die Endscheiben aufgebracht, zum Beispiel verklebt wird. Eine Alternative ist die Verwendung von elastischen Endscheiben, die zum Axialspielausgleich einen gesonderten Bereich aufweisen. Insbesondere Filterpatronen mit PUR-Endscheiben können ohne zusätzlichen Fertigungsaufwand durch eine entsprechende Gestaltung der Gußform für die Endscheiben mit einem Axialspielausgleich versehen werden.

Gemäß einer Modifikation der Erfindung wird an der Patrone eine Rastnase vorgesehen, die nur in einer bestimmten Winkelstellung in eine dazugehörige Aufnahme im Gehäuse eingreift. Auf diese Weise ist die Montage der Rundfilterpatrone nur in einer bestimmten Winkelstellung im Gehäuse möglich. Durch diese Einrichtung wird die Funktionszuverlässigkeit des Filters erhöht. Wird der Filter ausgebaut und anschließend wieder eingebaut, was zum Beispiel geschieht um diesen von ausgefilterten Partikeln zu befreien, kann dabei die Stellung zwischen Gehäuse und Filterpatrone nicht verändert werden. Auf diese Weise ist auch nach dem erneuten Einbau der Filterpatrone eine zuverlässige Abdichtung zwischen Roh- und Reinseite des Filters gegeben. Andernfalls könnte die Patrone in einer abweichenden Winkelstellung in das Gehäuse eingebaut werden. Da sich aufgrund der Toleranzen und unterschiedlicher elastischer Verformung des Axialspielausgleiches ein sogenannter Druckverformungsrest des Axialspielausgleiches ergibt, könnte dabei ein Klaffen der Dichtung oder des Axialspielausgleiches die Folge sein. Der Druckverformungsrest ist derjenige Betrag, um den insbesondere der Axialspielausgleich durch die Toleranzen im Gehäuse plastisch verformt wird.

Diese und weitere Merkmale von bevorzugten Weiterbildungen der Erfindung gehen außer aus den Ansprüchen auch aus der Beschreibung und den Zeichnungen hervor.

### Zeichnung

Weitere Einzelheiten der Erfindung werden in den Zeichnungen anhand von schematischen Ausführungsbeispielen beschrieben. Hierbei zeigen:
- Figur 1: den Schnitt durch einen Filter mit topfförmigem Gehäuse und konischer Filterpatrone,
- Figur 2: den Schnitt A-A eines Ausschnittes des Filters gemäß Figur 1 (die Schnittebene B-B in Figur 2 entspricht der Darstellungsweise der Figur 1).

### Beschreibung der Ausführungsbeispiele

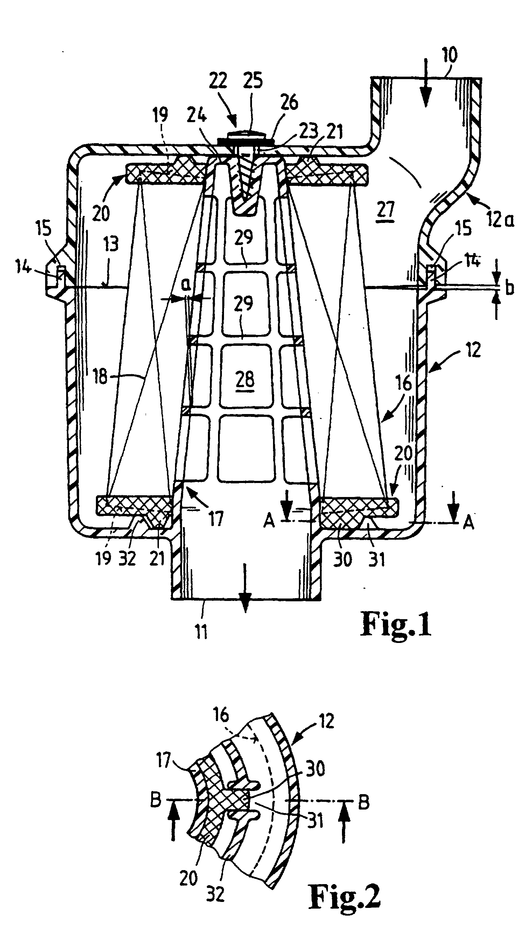

Der Filter gemäß Figur 1 weist ein Gehäuse mit einem Einlaß 10 und einem Auslaß 11 auf. Das Gehäuse besteht aus zwei Gehäuseschalen 12, 12a, die im Bereich einer Trennfuge 13 mit einer Labyrinthdichtung abgedichtet sind. Die Labyrinthdichtung besteht aus einem Ringabsatz 14 und einer Nut 15, die ineinander greifen und so unabhängig von einem Axialspiel b eine Abdichtung erzeugen.

Bei der Montage des Filters wird eine Rundfilterpatrone 16 auf ein Stützrohr 17 geschoben, welches fest mit der Gehäuseschale 12 verbunden ist. Sowohl Stützrohr als auch Rundfilterpatrone weisen eine konische Gestalt auf. Ein Filtermedium 18, _ welches im Ausführungsbeispiel aus einem sternförmig gefalteten Filterpapier besteht, ist mit Stirnseiten 19 in Endscheiben 20 aus PUR-Schaum eingebettet. Während die Flächen der Endscheiben auf einer Ebene liegen, liegen die Stimseiten 19 des Filtermediums 18 auf einem Kegelmantel. Die Endscheiben müssen in ihrer Dicke so groß gewählt werden, daß die Stirnseiten 19 vollständig in ihnen eingebettet sind. Beide Endscheiben weisen einen Axialspielausgleich 21 auf, der sich an den Wänden der Gehäuseschalen 12, 12a abstützt. Durch Aufsetzen der Gehäuseschale 12a und Befestigung der Verschraubung 22 wird die Rundfilterpatrone über den Axialspielausgleich 21 auf dem Stützrohr 17 axial fixiert. Die Verschraubung durchdringt die Gehäuseschale 12a durch eine Bohrung 23 und greift in ein Ende 24 des Stützrohres 17 ein. Zwischen Schraube 25 und Bohrung 23 ist eine Dichtung 26 vorgesehen.

Der dargestellte Filter kann zum Beispiel für die Reinigung der Ansaugluft einer Brennkraftmaschine verwendet werden. Die Ansaugluft fließt durch den Einlaß 10 in eine Rohseite 27 des Filters, durchtritt das Filtermedium 18 und das gitterförmige Stützrohr 17, erreicht so eine Reinseite 28 des Filters und verläßt diesen durch den Auslaß 11.

Die Gehäusehälften 12, 12a sind konsequent derart aufgebaut, daß sie sich unter Verwendung von jeweils zwei Formhälften gußtechnisch herstellen lassen. Die Entformungsrichtung der im wesentlichen topfförmigen Gehäusehälften erfolgt axial. Dem entsprechend sind Einlaß 10, Auslaß 11, Nut 15 und Ringabsatz 14 gestaltet. Auch das gitterförmige Stützrohr 17 läßt sich axial entformen, weil zwischen einzelnen Radialstreben 29 aufgrund der konischen Gestalt des Stützrohrs ein Versatz a entsteht, wodurch eine Hinterschneidung zwischen jeweils benachbarten Radialstreben vermieden wird.

Zur Erzeugung einer definierten Winkelstellung zwischen Gehäuseschale 12 und Rundfilterpatrone 16 besitzt die mit dieser Gehäuseschale kommunizierende Endscheibe 20 eine Rastnase 30. Dies läßt sich auch der Figur 2 entnehmen, wobei der Außenumfang der Rundfilterpatrone 16 gestrichelt eingezeichnet ist. Der Einbau der Rundfilterpatrone ist nur in einer einzigen Winkellage zur Gehäuseschale 12 möglich. In dieser Winkelstellung kommuniziert die Rastnase 30 mit einer Aufnahme 31. In allen anderen Winkelstellungen stößt die Rastnase 30 auf einen Ringwulst 32, wobei dem Monteur dann auffällt, daß sich die Rundfilterpatrone 16 nicht vollständig auf das Stützrohr 17 schieben läßt. Eine Vergleichbare Einrichtung zur Gewährleistung einer bestimmten Winkellage der Patrone im Gehäuse ist natürlich auch in der Gehäuseschale 12a denkbar. Auch die Gehäuseschalen zueinander können durch Nasen in ihrer Winkelstellung zueinander definiert werden.

## Patentansprüche

1. Filter, insbesondere Luftfilter für die Ansaugluft von Brennkraftmaschienen, umfassend
- ein topfförmiges Gehäuse mit einem Einlaß (10) und einem Auslaß (11) für das zu filternde Medium, wobei das Gehäuse aus mindestens zwei Gehäuseschalen (12, 12a) besteht,
- eine Rundfilterpatrone (16), die in das Gehäuse eine Rohseite (27) von einer Reinseite (28) abdichtend eingebaut ist,
- einem Stützrohr (17) mit einer gitterartigen Struktur, welches ein Filtermedium (18) reinseitig abstützt, wobei das Stützrohr (17) einteilig mit einer der Gehäuseschalen (12, 12a) hergestellt ist,
**dadurch gekennzeichnet, daß** das Stützrohr (17) und die Rundfilterpatrone (16) derart konisch ausgeführt sind, daß sich am Stützrohr keine Hinterschneidungen jeweils zwei benachbarter Radialstreben (29) entlang der Axialrichtung des topfförmigen Gehäuses ergeben.

2. Filter nach Anspruch 1, **dadurch gekennzeichnet, daß** die Rundfilterpatrone (16) aus einem sternförmig gefalteten Filterpapier besteht, welches aus einer rechteckigen Filterbahn gefaltet ist.

3. Filter, nach einem der vorherigen Ansprüche **dadurch gekennzeichnet, daß** in der Trennfuge (13) zwischen den beiden Gehäuseschalen (12, 12a) eine Labyrinthdichtung vorgesehen ist, die entlang der Axialrichtung des Gehäuses montierbar ist und einen Axialbereich(b)aufweist, innerhalb dessen bei einem Axialversatz der Gehäuseschalen (12, 12a) eine genügende Abdichtung gebildet ist.

4. Filter nach einem der vorherigen Ansprüche, **dadurch gekennzeichnet, daß** die Gehäuseschalen (12, 12a) über eine zentrale lösbare Verbindung, insbesondere eine Verschraubung (22), miteinander verbunden sind, wobei die Verbindung in ein freies Ende (24) des Stützrohres (17) eingebracht ist.

5. Filter nach einem der vorherigen Ansprüche, **dadurch gekennzeichnet, daß** mindestens eine von Endscheiben (20) der Rundfilterpatrone (16) einen elastisch ausgebildeten Axialspielausgleich (21) aufweist.

6. Filter nach einem der vorherigen Ansprüche, **dadurch gekennzeichnet, daß** die Rundfilterpatrone (16) eine Rastnase (30) aufweist, die in einer bestimmten Winkelstellung zwischen Rundfilterpatrone und Gehäuse in eine Aufnahme (31) im Gehäuse eingreift.

## Claims

1. Filter, especially air filter for the intake air for an internal combustion engine comprising
- a conical housing with an inlet (10) and an outlet (11) for the medium to be filtered ; whereby the housing comprises at least two housing shells (12, 12a).
- a round filter cartridge (16) which is arranged in the housing and seals the side (27) of the unfiltered material against the side (28) of the filtered material,
- a support tube (17) of a latticed structure which is supporting a filter medium (18) on the side of the filtered material; whereby the support tube (17) is formed in one piece with one of the housing shells (12, 12a),
**characterised in that** the support tube (17) and the round filter cartridge (16) has a conical shape to avoid undercuts on the support tube of two radial proximate supports (29) in the axial direction of the conical housing.

2. Filter according to claim 1, **characterised in that** the round filter cartridge (16) is made of filter paper folded in form of a star ; whereby the filter paper is folded from an rectangular filter strip.

3. Filter according to one of the preceding claims, **characterised in that** the interstice (13) is provided with a labyrinth seal between the two housing shells (12, 12a) which is mounted in the axial direction of the housing and presents an axial area (b) where a sufficient sealing is created by the axial movement of the housing shells (12, 12a).

4. Filter according to one of the preceding claims, **characterised in that** the housing shells (12, 12a) are connected to each other through a central mobile connection, e.g. a screw connection (22) ; whereby the connection is introduced in one free end (24) of the support tube (17).

5. Filter according to one of the preceding claims, **characterised in that** at least one of the end discs (20) of the round filter cartridge (16) presents a resilient axial clearance compensation (21).

6. Filter according to one of the preceding claims, **characterised in that** the round filter cartridge (16) presents a snap-in nose (30) which penetrates in a housing receptacle (31) in a specified angle position between the round filter cartridge and the housing.

## Revendications

1. Filtre, notamment un filtre à air pour l'air d'aspiration d'une machine à combustion interne comprenant :
- un boîtier conique avec une entrée (10) et une sortie (11) destinée au filtrage de la matière ; le boîtier étant composé d'au moins deux enveloppes de boîtier (12, 12a),
- une cartouche à filtre ronde (16) disposée dans le boîtier, rendant étanche le coté de la matière non filtrée par rapport au coté de la matière filtrée,
- un tube d'appui (17) avec une structure tramée qui supporte un moyen de filtrage (18) du coté de la matière filtrée ; le tube d'appui (17) étant fabriqué d'une pièce avec les enveloppes du boîtier (12, 12a),
**caractérisé en ce que** le tube d'appui (17) et la cartouche filtrante ronde (16) sont réalisés de manière conique afin d'éviter la formation de contre-dépouilles sur le tube d'appui à chaque fois de deux supports radiaux (29) voisins le long de la direction axiale du boîtier conique.

2. Filtre selon la revendication 1, **caractérisé en ce que** la cartouche à filtre ronde (16) est constituée d'un papier filtrant plié en forme d'étoile ; lequel papier est plié à partir d'une bande de filtre rectangulaire.

3. Filtre selon une des revendications précédentes, **caractérisé en ce qu'**un joint labyrinthe est prévu dans l'interstice (13) entre les deux enveloppes de boîtier (12, 12a) ; lequel joint est susceptible d'être monté le long de la direction axiale du boîtier et présente une zone axiale (b) à l'intérieur de laquelle se forme une étanchéité suffisante lors du déplacement axial des enveloppes du boîtier (12, 12a).

4. Filtre selon une des revendications précédentes, **caractérisé en ce que** les enveloppes du boîtier (12, 12a) sont reliées par une liaison centrale mobile, notamment un vissage (22) ; la liaison étant introduite dans une extrémité libre (24) du tube d'appui (17).

5. Filtre selon une des revendications précédentes, **caractérisé en ce qu'**au mois un des disques terminaux (20) de la cartouche à filtre ronde (16) présente une compensation de jeu axial élastique (21).

6. Filtre selon une des revendications précédentes, **caractérisé en ce que** la cartouche à filtre ronde (16) présente un ergot d'encliquetage (30) qui pénètre dans une position angulaire déterminée entre la cartouche à filtre ronde et le boîtier dans une réception (31) dans le boîtier.
